(19) Europäisches Patentamt
European Patent Office
Office européen des brevets

(11) **EP 3 457 647 A1**

(12) **EUROPEAN PATENT APPLICATION**

(43) Date of publication:
**20.03.2019 Bulletin 2019/12**

(51) Int Cl.:
*H04L 25/02* (2006.01)        *H04L 27/26* (2006.01)

(21) Application number: **17191265.2**

(22) Date of filing: **15.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Intel IP Corporation**
**Santa Clara, CA 95054 (US)**

(72) Inventor: **BARBU, Oana-Elena**
**9220 Aalborg (DK)**

(74) Representative: **Viering, Jentschura & Partner mbB**
**Patent- und Rechtsanwälte**
**Am Brauhaus 8**
**01099 Dresden (DE)**

(54) **DEVICE AND METHOD FOR CHANNEL ESTIMATION**

(57)      A system for processing wireless signals including a receiver configured to receive symbols of a superposed signal block, the superposed signal block including: a serving signal block received via a first communication channel, the serving signal block including reference symbols modulated by a first modulation scheme known at the receiving side, and an interfering signal block received via a second communication channel, the interfering signal block including interfering symbols modulated by a second modulation scheme, and a channel estimator configured to perform a channel estimation, the channel estimation including: performing a first partial channel estimation of a first communication channel by determining a first set of statistical channel parameters using the reference symbols and performing a second partial channel estimation of a second communication channel by determining a second set of statistical channel parameters using a plurality of candidate second modulation schemes and associating a probability value to each candidate second modulation scheme.

100

FIG. 3

## Description

### Technical Field

Various embodiments relate generally to devices and methods for channel estimation at a receiver of a communication link.

### Background

5G wireless communication systems should support diverse usage scenarios and satisfy diversified demands. It should support three principal categories of mobile network services including Enhanced Mobile Broadband (eMBB), Ultra-Reliable and Low-Latency Communications (uRLLC), and Massive Machine Type Communications (mMTC). Each of these services have different performance requirements that may not be compatible with each other. For example, eMBB services (e.g., high definition multimedia content transmissions) have high bandwidth requirements, uRLLC services (e.g., communications between self-driving vehicles) have strict reliability and latency requirements, and mMTC services (e.g., communications between Internet of Things devices) have high connection density requirements.

Difficulties arise when eMBB traffic and uRLLC traffic dynamically share the same resources of a communication channel. If multiplexing is not allowed, dynamic resource sharing requires control schemes that have large overheads or conflict detection schemes that interrupt eMBB traffic. For example, a portion of the channel resources may be dedicated to a control channel used to to dynamically allocate the remaining resources to eMBB traffic and uRLLC traffic. For another example, a dynamic release of eMBB resources in favor of uRLLC traffic may resort to a listen-before-talk transmission scheme. In such case, an eMBB transmitter needs to be able to detect if there are any uRLLC transmissions before transmitting, and will only transmit if no uRLLC transmission is detected.

To avoid a potentially unnecessary interruption of the eMBB traffic, multiplexing may be allowed and uRLLC traffic may puncture the eMBB traffic. eMBB traffic and uRLLC traffic may be simultaneously transmitted using two overlapping sets of resources. For example, all resources of a communication channel may be allocated to the transmission of eMBB traffic but the stringent latency budget of a uRLLC transmission may not allow the transmission of the URLLC traffic to wait until vacant resources become available. In order to ensure ultra-low latencies (ULL), the uRLLC transmission should be scheduled in a near instantaneous fashion, and hence, it may require scheduling a uRLLC transmission on resources already occupied by a high data-rate eMBB transmission. This multiplexing scheme yields co-channel interference on the eMBB receiver as the uRLLC transmission may interfere with the eMBB transmission, leading to throughput degradation of the eMBB receiver (and vice-versa for the uRLLC receiver). What exacerbates the problem further is that, given the stringent ULL requirements, the uRLLC traffic may be multiplexed without informing the eMBB receiver about the potential interference (i.e., which resources are interfered, what is the structure of the interfering signal, etc.). Without this information, the eMBB receiver remains unaware of the interference and suffers severe performance degradation stemming from poorly performing channel estimation and equalization.

### Summary

In various examples, a system and method for processing wireless signals is provided. The system includes a receiver configured to receive symbols of a superposed signal block, the superposed signal block including: a serving signal block received via a first communication channel, the serving signal block including reference symbols provided in a plurality of reference symbol resource blocks known at the receiving side, the reference symbols selected from a first set of symbols known at the receiving side and modulated by a first modulation scheme known at the receiving side, and an interfering signal block received via a second communication channel, the interfering signal block including interfering symbols selected from a second set of symbols and modulated by a second modulation scheme, and a channel estimator configured to perform a channel estimation, the channel estimation including: performing a first partial channel estimation of the first communication channel by determining a first set of statistical channel parameters using the reference symbols and the received symbols corresponding to one or more of the plurality of reference symbol resource blocks and performing a second partial channel estimation of the second communication channel by determining a second set of statistical channel parameters using a plurality of candidate second modulation schemes from a set of candidate second modulation schemes and associating a probability value to each candidate second modulation scheme of the set of candidate second modulation schemes to approximate the interfering symbols provided in one or more of the plurality of reference symbol resource blocks as the reference symbols of the serving signal block.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG. 1 shows a diagram illustrating a radio communication system demonstrating interference between an eMBB transmission and a uRLLC transmission;

FIG. 2A shows a diagram conceptually illustrating a multiplexed received signal including a broadband signal and a reliable low latency signal;

FIG. 2B shows a diagram illustrating the sparsity of the uRLLC traffic in a given time-slot;

FIG. 3 shows a block diagram illustrating a radio communication system according to at least one example;

FIG. 4 shows charts comparing the mean squared error (MSE) of the channel frequency response (CFR) and the estimated SNR over the selected SNR and signal to interference ratio (SIR) ranges of a benchmark RWF estimator and the BLIC estimator;

FIG. 5 shows charts comparing the true and the estimated CFR for the serving and interfering channels;

FIGS. 6 and 7 show charts comparing the MSE of the serving CFRs over the selected SNR and signal to interference ratio (SIR) ranges of a RWF estimator and various BLIC estimators configured with different probability vectors;

FIG. 8 shows a chart comparing estimated SNR against true SNR and SIR;

FIGS. 9A-9D shows various scenarios of intra-cell eMBB and uRLLC collisions; and

FIG. 10 shows a flow chart of a channel estimation process according to at least one example.

## Description

The following detailed description refers to the accompanying drawings that show, by way of illustration, specific details and embodiments in which the invention may be practiced.

The term "connection" may include both an indirect "connection" and a direct "connection".

As used herein, a "circuit" may be understood as any kind of a logic implementing entity, which may be special purpose circuitry or a processor executing software stored in a memory, firmware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as for example Java. Any other kind of implementation of the respective functions which will be described in more detail below may also be understood as a "circuit". It may also be understood that any two (or more) of the described circuits may be combined into one circuit.

The methods and devices described herein may be based on channel estimation of a communication channel including broadband traffic and reliable low latency traffic. It is understood that comments made in connection with a described method may also hold true for a corresponding device configured to perform the method and vice versa. For example, if a specific process is described, a corresponding device may include a unit to perform the described process, even if such unit is not explicitly described or illustrated in the figures. Further, it is understood that the features of the various examples described herein may be combined with each other, unless specifically noted otherwise.

The methods and devices as described herein may be utilized as part of and for radio communications systems, including multiple carrier radio transmission systems, such as, for example, frequency selective and time-varying wide band mobile communication systems including those based on Orthogonal Frequency Division Multiplexing (OFDM). The devices disclosed may be embodied in baseband circuits used for the transmission and reception of OFDM radio signals. These circuits may be included in transmission/reception points (TRPs) like base stations or relay stations and mobile user devices or user equipment (UE) like smartphones, tablets, or other kinds of mobile user terminals. The described devices may be employed to perform methods as disclosed herein, although those methods may be performed in any other way as well.

The following description may be read in connection with any kind of multiple carrier radio transmission system, including any mobile communications system employing multiple carrier modulation, such as, for example, the 5G New Radio (NR) Standard, the Long-Term Evolution (LTE) Standard, and the Universal Mobile Telecommunications System (UMTS) Standard.

The following description may also be read in connection with multiple carrier radio transmission systems in the field of digital video broadcasting (DVB-T/H) which is based on terrestrial transmitters and a communication system design adapted for mobile or hand-held receivers.

The methods and devices as described herein may be utilized with any sort of antenna configurations employed within the multiple carrier radio transmission system as described herein. The concepts presented herein are applicable to radio systems employing an arbitrary number of transmit and/or receive antennas, that is Single Input Single Output (SISO) systems, Single Input Multiple Output (SIMO) systems, Multiple Input Single Output (MISO) systems and Multiple Input Multiple Output (MIMO) systems.

In various examples, an eMBB receiver having an interference-aware channel estimator that can handle cases when uRLLC transmissions occur on resources allocated to an eMBB transmission which were not released for uRLLC transmission in either the uplink or downlink direction is provided. The channel estimator efficiently computes a channel frequency response of a serving channel and an interfering channel to retrieve eMBB data transmitted on a serving channel while performing blind uRLLC-interference cancellation, which should enhance eMBB throughput performance where eMBB traffic and uRLLC traffic are multiplexed.

The methods and devices described herein may include determining a sequence of soft value estimates of channel frequency responses based on a received signal including a sequence of known pilot symbols arranged according to a known pilot pattern.

Various aspects of this disclosure illustratively provide a receiver that uses e.g. approximate Bayesian inference to iterate between computing soft estimates of a channel frequency response (CFR), interference reconstruction, data detection, and signal-to-noise-ratio (SNR). A "soft" value may be understood as a probability value in the range from 0 to 1.

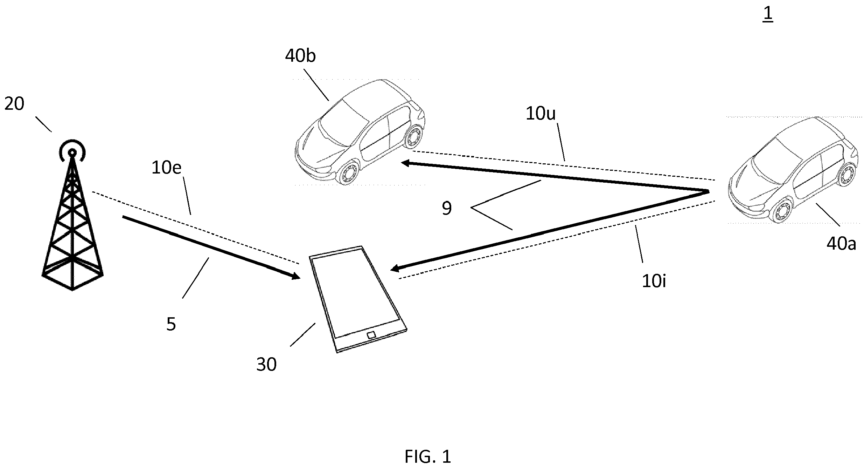

FIG. 1 shows a diagram illustrating a radio communication system demonstrating interference between an eMBB transmission and a uRLLC transmission. As shown in FIG. 1, the radio communication system 1 may include at least one eMBB transmission/reception point 20, such as a base station (e.g., NodeB, eNodeB), at least one eMBB mobile user terminal 30, such as a mobile phone, and a plurality of uRLLC terminals 40a-b, such as the communications systems of autonomous self-driving vehicles. Referring to FIG. 1, the radio communication system 1 has provisioned resource blocks of one or more subcarriers establishing an eMBB communication channel 10e (i.e., serving communication channel) between a transmission/reception point 20 and a mobile user terminal 30.

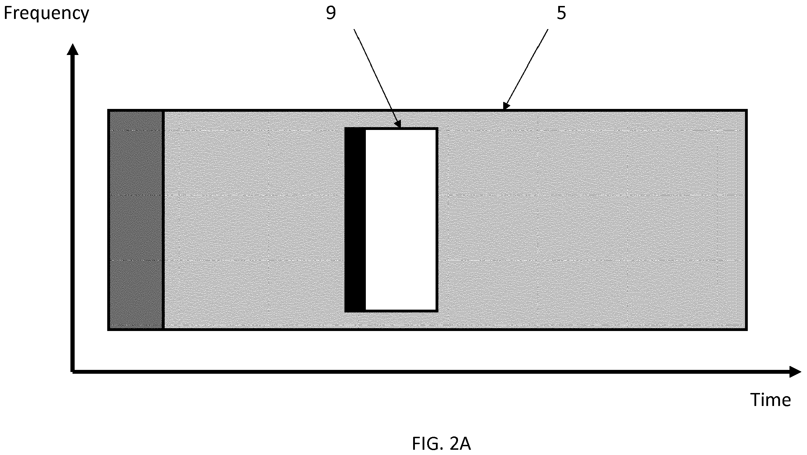

The transmission/reception point 20 may transmit a downlink (DL) eMBB signal 5 to mobile user terminal 30 while simultaneously a uRLLC terminal 40a may transmit an uplink (UL) uRLLC signal 9 to uRLLC terminal 40b over one or more of the same resource blocks of the one or more subcarriers allocated to the eMBB transmission. The uRLLC terminal 40b receives the UL uRLLC signal 9 over a uRLLC communication channel 10u. The received signal at the mobile user terminal 30 is the DL eMBB signal 5 received over the serving communication channel 10e corrupted by the UL uRLLC signal 9 received over the interfering communication channel 10i and any noise in the serving communication channel 10e. FIG. 2A shows a diagram conceptually illustrating a multiplexed received signal including a DL eMBB signal 5 and an UL uRLLC signal 9. Since uRLLC traffic should be very sparse, an eMBB receiver should only encounter intermittent co-channel interference from a synchronized interfering uRLLC transmission and should be able to recover the eMBB transmission because most of the pilot symbols should not be corrupted.

For demodulating modulated data in the presence of an interfering signal on the communication channel, knowledge of the channel frequency response for the serving signal and the interfering signal is required. In such systems, the receiver must provide an appropriate dynamic estimation of the channels before the demodulation of the serving signal and cancellation of the interfering signal.

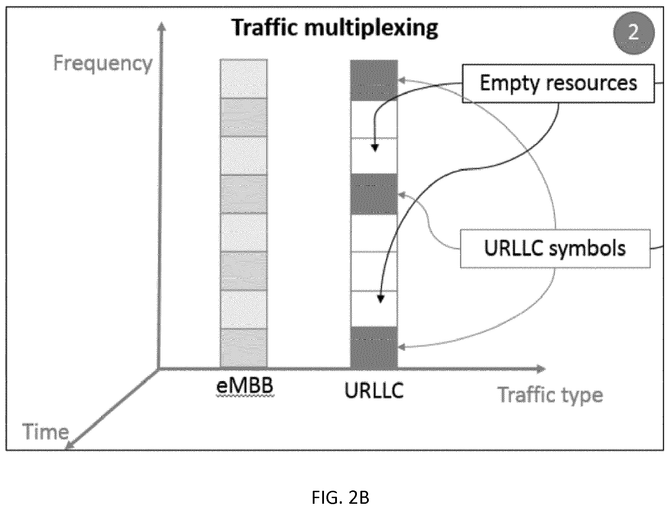

In various examples, a channel estimator is provided for an eMBB receiver experiencing interference from uRLLC traffic multiplexing to cancel the interference and recover the eMBB signal. Such a channel estimator may estimate the serving channel frequency response, the interfering channel frequency response, the signal-to-noise ratio (SNR), and the interfering signal without having any information about the modulation of the interfering uRLLC signals. The channel estimator may be based on two assumptions. The first assumption is that the typical uRLLC traffic is sporadic, and therefore the channel estimator may assume that only a random subset of the eMBB resources are being interfered by a uRLLC transmission in a given time-slot, i.e., uRLLC signal is sparse. FIG. 2B shows a diagram illustrating the sparsity of the uRLLC traffic in a given time-slot. During a time-slot, an eMBB transmitter/receiver may not utilize all $N$ resources in the bandwidth and a uRLLC transmitter/receiver may use only a subset $M$ of these resources, of cardinality $0 < M < N$, where $M$ and $N$ are integers. Further, uRLLC traffic may interfere with eMBB traffic at one or more of the pilot positions of the eMBB signal.

The second assumption is that in order to meet the reliability and latency requirements a lower order modulation may be used for the uRLLC traffic since a lower order modulation is more robust and requires less resources, and therefore the channel estimator may assume that uRLLC traffic is modulated by a lower order modulation such as binary phase-shift keying (BPSK), quadrature phase-shift keying (QPSK), or lower order quadrature amplitude modulation (QAM).

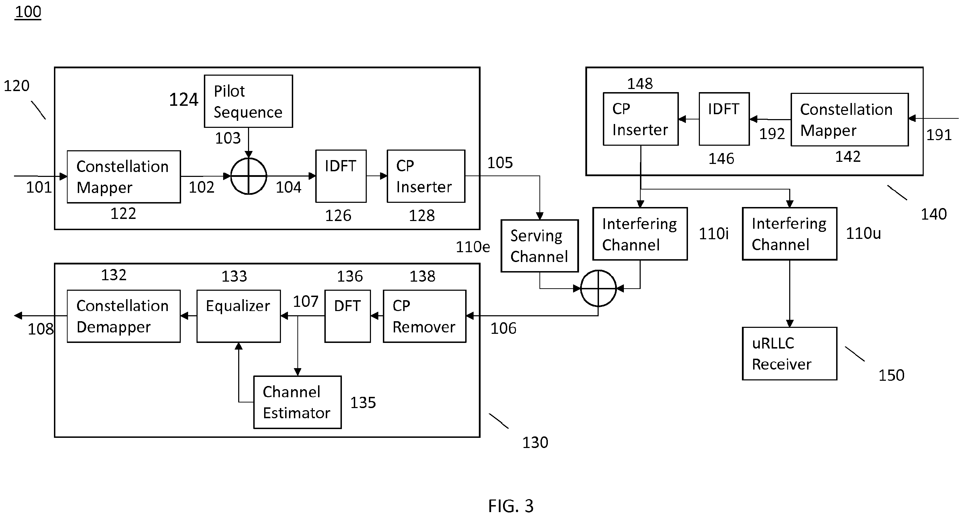

FIG. 3 shows a block diagram illustrating a radio communication system 100 according to at least one example. Each transmission/reception point and mobile user terminal may include the correspondingly provided circuits and components such as e.g. one or more antennas, an RF (radio frequency) transceiver circuit including a transmitter 120 and a receiver 130, a baseband circuit, and the like.

The radio communication system 100 may include a transmission/reception point 20 including an eMBB transmitter 120 and a mobile user terminal 30 including an eMBB receiver 130, and vice versa. The eMBB transmitter 120 may include a constellation mapper 122, a pilot sequence generator 124, an IDFT block 126, and a cyclic prefix (CP) inserter 128. The eMBB receiver 130 may include a constellation demapper 132, a channel equalizer 133, a channel estimator 135, a DFT block 136, and a cyclic prefix remover 138. The radio communication system 100 may include a uRLLC terminal 40a including a uRLLC transmitter 140 and a uRLLC terminal 40b including a uRLLC receiver 150, and vice versa. The uRLLC transmitter 140 may include a constellation mapper 142, an IDFT block 146, and a cyclic prefix (CP) inserter 148.

In various examples, during the ith transmission time interval, a bit vector 101, $u_i$, of information bits which may be a portion of encoded multimedia data (which may include e.g. video data and/or audio data and/or text data and/or any other kind of data as desired) may be provided to an eMBB transmitter 120. The constellation mapper 122 may be configured to modulate the bit vector 101, $u_i$, onto a set of complex symbols, i.e., a constellation to thereby generate data symbols 102 which may be provided to a multiplexer. A sequence of pilot symbols 103 generated by a pilot sequence generator 124 may also be provided to the multiplexer. The multiplexer may be configured to multiplex the data symbols 102 and the pilot symbols 103 to generate an interleaved symbol vector 104, $x_i$, where $x_i \in CN$ (complex numbers), which is provided to an IDFT block 126. The IDFT block 126 may be configured to perform an Inverse Discrete Fourier Transformation (IDFT) (in general an inverse spectral transformation) to the interleaved symbol vector 104. The CP inserter 128 may further prepend a cyclic prefix (CP) on the resulting samples to thereby generate an eMBB transmission signal block 105 which is then transmitted over an eMBB communication channel 110e (i.e., serving communication channel) as part of an eMBB signal received by an eMBB receiver 130. The CP may consist of a copy of its last samples, and whose length should be at least as long as the maximum excess delay of the channel.

Simultaneously, a bit vector 191, $v_i$ of information bits which may be a portion of a navigation information may be provided to an uRLLC transmitter 140. The constellation mapper 142 may be configured to modulate the bit vector 191, $v_i$, onto a set of complex symbols, i.e., a constellation to thereby generate data symbols 192 which may be provided to an IDFT block 146. The IDFT block 146 may be configured to perform an Inverse Discrete Fourier Transformation (IDFT) (in general an inverse spectral transformation) on the data symbols 192. The CP inserter 148 may further prepend a cyclic prefix (CP) on the resulting samples to thereby generate a uRLLC transmission block 195 which is then transmitted over the uRLLC communication channel 110u as a part of a uRLLC signal. The uRLLC transmission signal block 195 is also received by an eMBB receiver over the interfering communication channel 110i as part of an interfering signal.

The eMBB communication channel 110e and uRLLC communication channel 110u are provided and synchronized on the same frequency subcarriers and uRLLC transmissions may share the same resource blocks (i.e., time-slots) on the one or more common frequency subcarriers. Thus, relative to an eMBB receiver 130, the uRLLC transmission is an interfering transmission. The eMBB receiver 130 receives the serving eMBB transmission on the eMBB communication channel 110e, also called, a serving communication channel and receives an interfering uRLLC transmission on an interfering communication channel 110i. Both of the serving and interfering communication channels may be a time-varying channel but are considered time invariant throughout the duration of a transmission block. Each of these channels has its own path and thus has its own channel frequency response. Additionally, the eMBB communication channel 110e may be affected by noise, such as additive white Gaussian noise.

At a mobile user terminal 30 including an eMBB receiver 130, a composite signal may be received. The received signal block 106 may appear to be a superposition of the serving signal from the eMBB transmitter, the interfering signal from the uRLLC transmitter, and noise from the communication channel.

The eMBB receiver 130 may have a CP remover 138 configured to remove the CP and may have a DFT block 136 configured to perform a Discrete Fourier Transformation (DFT) (in general a spectral transformation) on the received signal block without the CP, to thereby generate a received symbol vector 107, $y(k)$. The channel estimator 135 may be configured to carry out the process to determine the approximate channel frequency responses of the serving communication channel and the interfering communication channel and provide such information to the channel equalizer 133. Based on the channel estimations, the equalizer 133 may be configured to carry out the process to recover the complex signals of the eMBB transmission signal block and cancel the complex signals of the uRLLC interference signal block. The recovered signals are then demodulated by the constellation demapper 132 and further on decoded to reconstruct a bit vector 108, $u_i$, which may then be source decoded to reconstruct multimedia data. The process to determine the approximate channel frequency responses will be described in more detail below.

To properly receive and decode the transmission signal block 105 transmitted via the serving communication channel 110e, the eMBB receiver 130 should determine the propagation characteristics of the serving communication channel 110e and interfering communication channel 110i. By way of example, this may be carried out by determining statistical characterizations of the serving channel frequency response and interfering channel frequency response by using an approximate channel frequency response (CFR) model as follows. The statisitical CFR model is implemented in the eMBB receiver 130.

In order to facilitate channel estimation, the eMBB transmitter 120 may insert known pilot symbols at predefined time and frequency slots of a transmission signal block. The eMBB receiver 130 also has knowledge of the value and position of the pilot symbols interleaved in the transmission signal block. In one example, the received symbols observed at the pilot positions may be used for estimating the channel frequency responses. The observations may contain samples of the serving channel frequency response at the pilot positions corrupted by AWGN samples and interfering samples.

In various examples, eMBB traffic and uRLLC traffic may be generated using the same numerology, i.e., same subcarrier spacing fs, same circular prefix (CP) length, same slot duration, and same bandwidth $[f_c - B/2, f_c + B/2]$, $B = Nf_s$ where $f_c$ is the center frequency of a subcarrier and N is the number of shared resources.

In various examples, the numerology of the multiplexed eMBB traffic and uRLLC traffic are identical. For example, the duration of the subframe may be 1 ms and the physical resource block (PRB) may include 12 subcarriers. At normal CP length, for subcarrier spacings (SCS) of up to 60 kHz, a slot may contain 7 or 14 OFDM symbols, while for SCS of more than 60 kHz, a slot consists of 14 OFDM symbols. Below 6 GHz, uRLLC SCS is 60 kHz, while eMBB can support 15, 30 or 60 kHz SCS.

For example, in an OFDM system, the received signal at the P pilot positions during the current OFDM interval and after the DFT processing may be modeled as

$$y = Xh + Sg + n \qquad (Eq. 1)$$

where $X = diag(x) \in \mathbb{C}^{P \times P}$ is the known-pilot diagonal matrix, $h$ is the reference channel frequency response vector, $S = diag(x) \in \mathbb{C}^{P \times P}$ is the unknown interfering symbols diagonal matrix, g is the interfering channel frequency response vector, and n is the noise vector with $p(n) \propto CN(n|0, \lambda^{-1}I)$, where CN denotes a complex random variable having a circular symmetric complex normal distribution and $\lambda$ is the noise precision (i.e. the inverse of the variance of n). The interfering vector $s$ is a sparse vector, i.e. only some of the P pilots are interfered with by uRLLC traffic. From Eq. (1), $p(y|h, S, g, \lambda) \propto CN(y|Xh + Sg, \lambda^{-1}I)$.

The task of the channel estimator is to compute accurate estimates of the serving channel frequency response. The serving channel frequency response vector may be identical to the pilot or reference channel frequency response vector $h$ in Eq. (1). A channel estimator of the unknowns in the model x, h, s, g, $\lambda$ may be derived by assuming that:

1. $p(h) \propto CN(h|0, \Sigma)$, where the covariance matrix $\Sigma$ is constructed under a flat power delay profile (PDP) assumption, with taps independent and uniformly distributed in [$0, T_{CP}$],
2. similarly, $p(g) \propto CN(g|0, \Sigma)$, and
3. $p(\lambda) \propto 1/\lambda$.

Since the eMBB receiver does not know the modulation alphabet of the uRLLC interferer, it assumes that the entries of the interfering vector $s$ are independent and that the entries either have a value of zero (i.e., no interference and not modulated) or are modulated by one or more low order modulation schemes (i.e., when there is interference). For example, low order modulation schemes include binary phase-shift keying (BPSK), quadrature phase-shift keying (QPSK), and 16-quadrature amplitude modulation (16-QAM) modulation schemes. Further, the eMBB receiver assigns a probability value to each of the one or more candidate modulation schemes including when no modulation is applied, the probability value corresponding to a likelihood that a particular candidate modulation scheme is applied to the entry or corresponding to a likelihood that the entry has a value of zero and is not modulated.

In various embodiments, the entries of the interfering vector $s$ may be either 0 (i.e., not modulated), BPSK modulated, QPSK modulated, or 16-QAM modulated. The constellation of each candidate modulation scheme may be denoted as $S_0$, $S_{bpsk}$, $S_{qpsk}$, and $Sq_{am}$. Each candidate modulation scheme is assigned a probability value. For example, the probability that an entry belongs in the So constellation (i.e., has a value of zero) is denoted by $p_a$, the probability that an entry belongs in the $S_{bpsk}$ constellation (i.e., is BPSK modulated) is denoted by $p_b$, the probability that an entry belongs in the $S_{qpsk}$ constellation (i.e., is QPSK modulated) is denoted by $p_c$, and the probability that an entry belongs in the $S_{qam}$ constellation (i.e., is 16-QAM modulated) is denoted by $p_d$. For example, $p_{bspk}$ denotes the probability of a particular symbol in the $S_{bpsk}$ constellation, $p_{qspk}$ denotes the probability of a particular symbol in the $S_{qpsk}$ constellation, and $p_{qam}$ denotes the probability of a particular symbol in the $S_{qam}$ constellation. The symbols within each constellation set may be equiprobable. In this case, a probability mass function (pmf) of $p(s_k)$ may be modeled as:

$$p(s_k) = p_a\delta(s_k) + p_b p_{bpsk} \sum_{u \in S_{bpsk}} \delta(s_k - u) + p_c p_{qpsk} \sum_{u \in S_{qpsk}} \delta(s_k - u)$$

$$+ p_d p_{qam} \sum_{u \in S_{qam}} \delta(s_k - u) \qquad\qquad (Eq.\,2)$$

for *all* $k \in [1: P]$, where P is the number of pilot symbols. If more information is available, the probabilities $p_i$ for each constellation set can be adjusted accordingly, i.e. lower order modulations can be given higher probability, the lack of interference can be as likely as its presence etc. The sum of the probabilities $p_i$ for each constellation set should sum to 1. For example, $p_a + p_b + p_c + p_d = 1$.

Using the above assumptions, a posterior probability density function (pdf) of all the unknowns of the system may be modeled as:

$$p(h, s, g, \lambda | y) \propto p(y|h, s, g, \lambda)p(h)p(g) \prod_{k=1}^{P} p(s_k)\,p(\lambda) \qquad (Eq.\,3)$$

Given the complex structure of (Eq. 3), an approximate representation that captures the time and frequency selectivity of the channel frequency response is provided. This choice allows the exploitation of the sparsity of the uRLLC traffic property of the CFR model to ensure tractable solutions given that only the observed variable y and a subset x of pilot symbols are known.

In order to jointly estimate the variables of interest, e.g., reference channel frequency response, interfering channel frequency response, interfering data vector, and noise vector, based on the observed received data vector and a known pilot vector, a variational inference Bayesian approach may be used and the posterior pdfs of the unknown quantities given the set of observations may be computed. By way of example, the process may apply a MF-BP method that combines mean field (MF) approximation with belief propagation (BP). For example, a Belief Propagation (BP) algorithm may be employed to resolve the unknown random variables of the system. The BP algorithm yields good approximations of the posterior probability densities or marginal distributions of the hidden variables that are referred to as beliefs. To reduce complexity, approximations in the computations of the beliefs may be applied. The computations associated with the updates of continuous random variables may employ a Mean Field (MF) approximation. The MF algorithm outputs the approximate pdfs of the hidden random variables of interest by assuming that the global pdf is fully factorizable. Either MF or BP updates of the unknown variables are performed. The solution of the method is the pdf which minimizes the Kullback-Liebler divergence between the approximated and the true pdf. Since both MF and BP have an iterative nature, similar to message exchanges between nodes of a factor graph, the joint framework may be formulated as a message-passing algorithm. In this context, a factor graph is a bipartite graph that depicts the dependencies in a probabilistic model by connecting each function with all the variables that are its arguments.

A mean-field (MF) belief-propagation (BP) framework may be applied to derive updates for the beliefs (approximate posterior pdfs) of the unknowns in (Eq .3), by assigning the variables h, g, and λ to the MF region and s to the BP region. Then, the belief of the noise precision is a Gamma pdf with the first moment reading

$$\hat{\lambda} = \frac{P}{y^H y - 2R\left(y^H(X\hat{h} + \hat{S}\hat{g})\right) + 2R\left(\hat{h}^H \hat{X}^H \hat{S}\hat{g}\right) + \sum_{k=1}^{P}|x_k|^2|\hat{h}_k|^2 + \sum_{k=1}^{P}|\hat{s}_k|^2|\hat{g}_k|^2} \qquad (Eq.\,4)$$

where *R()* stands for the real value of the quantity in between the brackets.

Then, the belief for the serving (and reference) channel frequency response is a complex Gaussian pdf with mean and variance (i.e., first and second order moments of the pilot symbols and channel vectors x and h):

$$\hat{h} = \hat{\lambda}\Sigma_h X^H(y - \hat{S}\hat{g}) \qquad\qquad (Eq.\,5)$$

and

$$\Sigma_h = \left( \Sigma^{-1} + \hat{\lambda} X^H X \right)^{-1} \qquad\qquad (Eq.\,6)$$

To compute both the noise precision and channel frequency response estimates, the first and second order moments of the interfering symbol and channel vectors g and s are also required. Their beliefs are computed in the following. Similar to (Eq. 5) and (Eq. 6), the belief of the interfering channel is complex Gaussian pdf with mean and variance:

$$\hat{g} = \hat{\lambda} \Sigma_g S^H \left( y - X\hat{h} \right) \qquad\qquad (Eq.\,7)$$

and

$$\Sigma_g = \left( \Sigma^{-1} + \hat{\lambda} \langle \hat{S}^H \hat{S} \rangle \right)^{-1} \qquad\qquad (Eq.\,8)$$

Lastly, the belief of the *k*th entry in the interfering signal vector s is $q(s_k) = p(s_k)m(s_k)$ where $p(s_k)$ is defined in (Eq. 2) and

$$m(s_k) \propto \exp\left( 2\lambda R \left( \left( y_k^* \hat{g}_k - \hat{h}_k x_k^* \hat{g}_k \right) s_k \right) - \hat{\lambda} |s_k|^2 |\hat{g}_k|^2 - \hat{\lambda} s_k^* \sum_{l \neq k} M_{k,p} \hat{s}_p \right) \quad (Eq.\,9)$$

where $M = \Sigma_g + \hat{g}\hat{g}^H$. In the updates of the beliefs above, the first and second order moments of $s_k$, i.e.

$$\hat{s}_k = \sum_{u \in S} (u) q(s_k = u) \qquad\qquad (Eq.\,10)$$

and

$$|\hat{s}_k|^2 = \sum_{u \in S} |u|^2 q(s_k = u) \qquad\qquad (Eq.\,11)$$

and $S_0 \cup S_{bpsk} \cup S_{qpsk} \cup S_{qam}$. $m(s_k)$ is defined in (Eq. 9) and has the meaning of a pdf, the value which we would compute based on observing the signal only, i.e. without making any assumptions about the interference structure. $q(s_k)$ is the belief of the symbol $s_k$, i.e. the approximate posterior pdf of $s_k$ and it is defined as the product between the prior pdf $p(s_k)$ defined in (Eq. 2) and the message $m(s_k)$. This quantity is defined in a phrase between (Eqs. 8 and 9) above. The matrix M is the second order moment matrix of g. The channel estimator implements an iterative process that refines the estimates of each of the unknown random variables of the model.

1. Initialize $\hat{\lambda} = 1$, $\hat{h} = 0$, $\hat{s} = (1, 0, ..., 0)^T$, $\Sigma$ (with robust Wiener filter assumption) and set a MaxIterations
2. for i = 1: MaxIterations do
3. Update $\hat{h}$ using (Eqs. 6 and 5) of complexities $O(P^3)$ and $O(P^2)$ respectively
4. Update $\hat{g}$ using (Eqs. 8 and 7) of complexities $O(P^3)$ and $O(P^2)$ respectively
5. Update $\hat{\lambda}$ using (Eq. 4) of complexity $O(P)$
6. Update $\hat{s}$ using (Eq. 9) of complexity $O(P)$
7. end for

The estimates are iteratively refined and eventually converges. In experiments, convergence occurs within 20 iterations as reflected by the Mean Squared Error (MSE). The order of the updates may be changed. For example, MaxIterations may be set to 20.

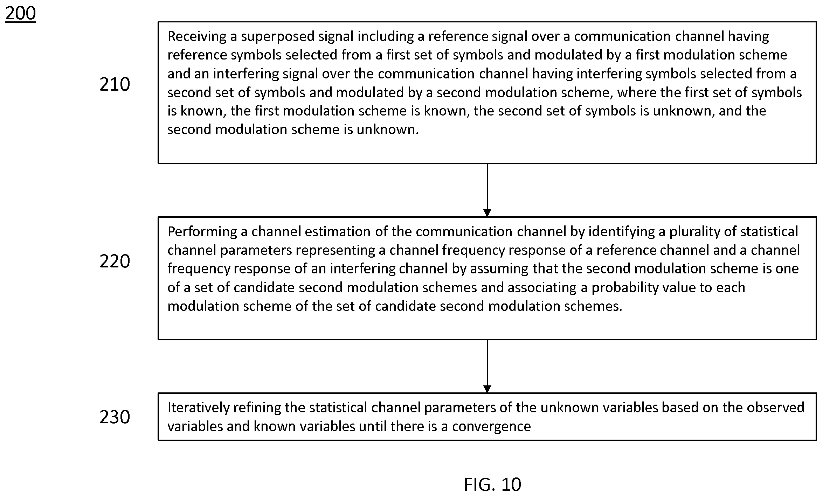

FIG. 10 shows a flow chart of a channel estimation process 200 according to at least one example. At 210, an eMBB receiver receives symbols of a superposed signal block including a serving signal block received via a serving communication channel and an interfering signal block received via an interfering communication channel. The serving signal block has interleaved data and reference symbols provided on a plurality of resource blocks. The reference symbols are provided on resource blocks known to the eMBB receiver. The reference symbols are selected from a first set of symbols and modulated by a first modulation scheme. The interfering signal block has interfering symbols selected from a second set of symbols and modulated by a second modulation scheme. The first set of symbols and the first modulation scheme are known to the receiver, but the second set of symbols and the second modulation scheme are not known to the receiver. At 220, the eMBB receiver performs a channel estimation of the serving communication channel and the interfering communication channel by using the known reference symbols and the received symbols in the resource blocks of the received signal block that correspond to one or more of the resource blocks allocated to the known reference symbols in the serving signal block. The channel estimation further includes determining a mean and variance of the serving channel frequency response of and a mean and variance of the interfering channel frequency response. The channel estimation further includes estimating a statistical distribution of the interfering symbols by assuming that the second modulation scheme is one of a set of candidate second modulation schemes and associating a probability value to each modulation scheme of the set of candidate second modulation schemes. At 230, the eMBB receiver iteratively refines the statistical channel parameters of the unknown variables based on the observed variables and known variables until there is a convergence.

In various examples, the first and second modulation schemes for each subcarrier may be different. The set of candidate second modulation schemes may include two or more lower order modulation schemes.

In Experiment 1, the eMBB channel estimation approximation model (BLIC) was tested through 100 Monte Carlo simulations per (SNR, SIR) pairs and the performance of the BLIC channel estimator was compared against a classical channel estimator, such as the robust Wiener filter (RWF) channel estimator which also computes estimates of the channel frequency response (CFR) and the signal-to-noise-ratio (SNR). Wiener filters are a class of optimum linear filters which involve linear estimation of a desired signal sequence from another related sequence. The coefficients of a Wiener filter are calculated to minimize the average squared distance between the filter output and a desired signal.

For example, in Experiment 1, 100 pilot symbols were used, the serving signal was modulated using 16 QAM, the interfering signal was modulated using QPSK, the SNR ranging from about 5 dB to about 25 dB, the SIR ranging from about 0 dB to about 20 dB, the interfering signal was sparse and affected subcarriers were drawn from a uniform discrete distribution, and the probabilities $p_a$, $p_b$, $p_c$, and $p_d$ were set to 0.2, 0.05, 0.7, 0.05, respectively, with equiprobable symbols for each constellation.

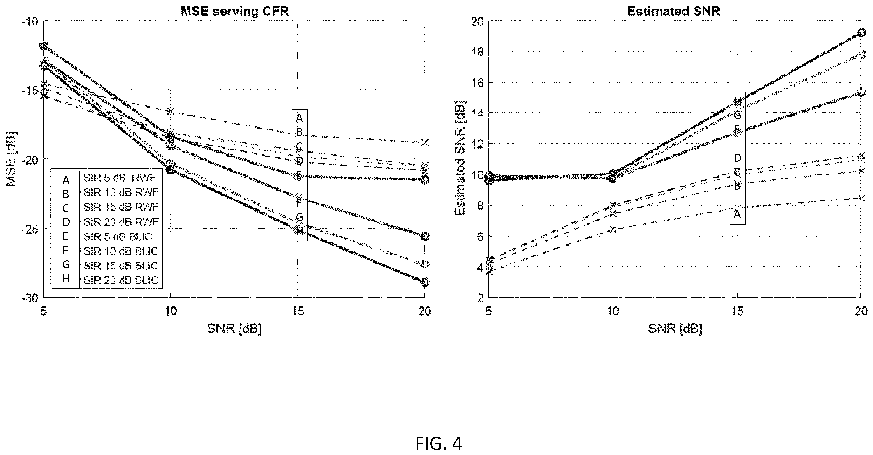

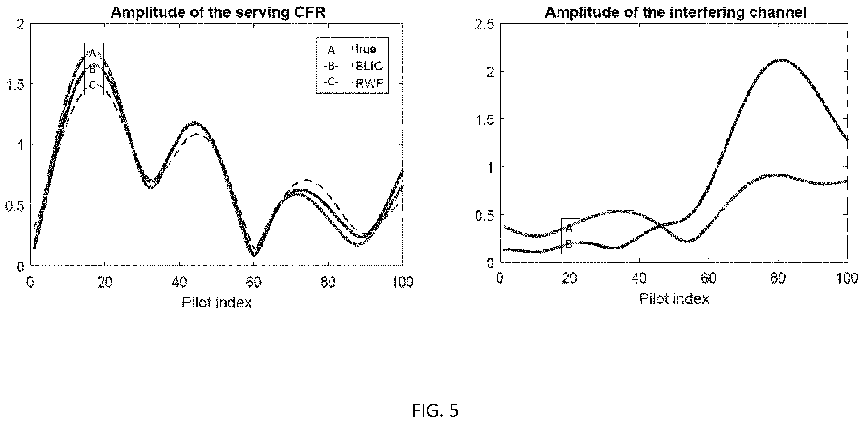

FIG. 4 shows charts comparing the mean squared error (MSE) of the serving CFRs and the estimated SNR over the selected SNR and signal to interference ratio (SIR) ranges of a benchmark RWF estimator and the BLIC estimator. FIG. 5 shows charts comparing the true and the estimated CFR for the serving and interfering channels. These metrics are used in conjunction to indicate the reconstruction error. For example, MSE should be minimized and SNR should be maximized.

In medium to high SIR regimes BLIC reconstructs the serving CFR accurately, as indicated by both the low MSE and the accurate estimates of the SNR. This confirms that BLIC has accurate reconstruction capabilities despite not knowing the modulation alphabet of the interferer. In the medium to high SNR regimes BLIC outperforms RWF for all tested SIR points, providing MSE gains of up to 10 dB.

In lower SNR regimes, BLIC exhibits a similar performance to that of RWF for all tested SIR, which confirms the hypothesis that interference can be treated as AWGN at low SNR.

In Experiments 2-4, the probabilities $p_a$, $p_b$, $p_c$, and $p_d$ were varied but the other conditions of the experiments were the same as that of Experiment 1. These experiments test how the assumptions about the modulation of the interferer affects the performance of the BLIC estimator. Table 1 shows three probability vectors that were used.

Table 1

|    | $p_a$ | $p_b$ | $p_c$ | $p_d$ |
|----|-------|-------|-------|-------|
| P1 | .5    | 0     | .5    | 0     |
| P2 | 0     | 0     | 1     | 0     |
| P3 | 0.25  | 0.25  | 0.25  | 0.25  |

For example, a BLIC estimator using P1 assumes each pilot symbol is either interference free or QPSK interfered with equal probability while a BLIC estimator using P2 assumes that each pilot is with certainty interfered by QPSK-modulated interference. Lastly, in one instantiation, a BLIC estimator knows the sparsity pattern and the modulation alphabet of the interferer.

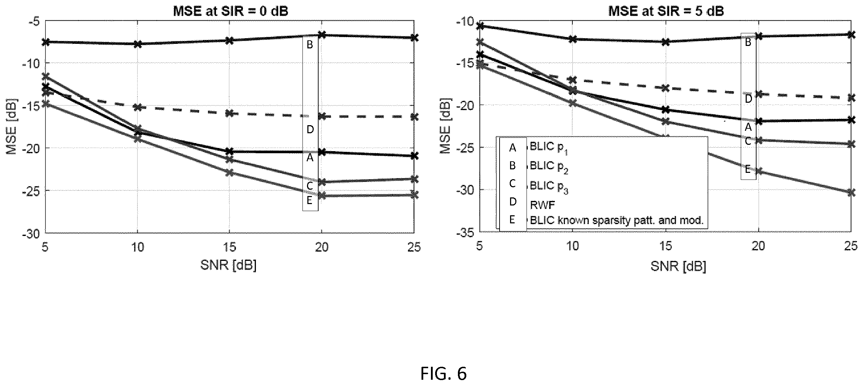

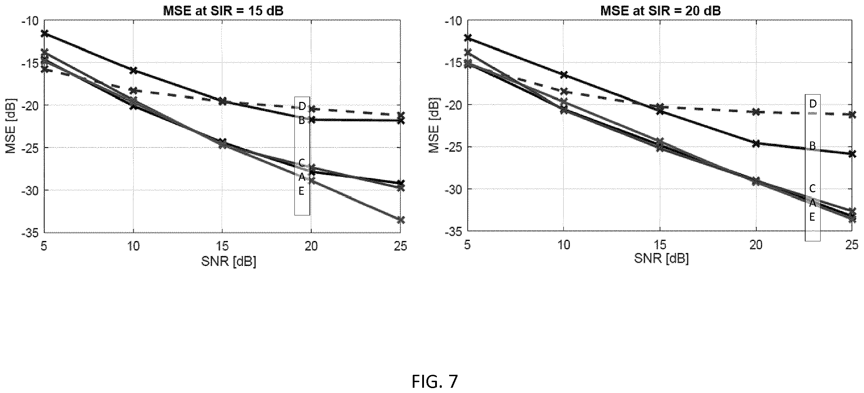

FIGS. 6 and 7 show charts comparing the MSE of the serving CFRs over the selected SNR and signal to interference ratio (SIR) ranges of a RWF estimator and various BLIC estimators configured with different probability vectors. Referring to FIGS. 6 and 7, the BLIC estimator suffers noticeable MSE degradation when it assumes a dense interference (i.e., when P2 is used) even though the modulation alphabet is known. When the BLIC estimator is aware that the interference is sparse (P1 or P3), it outperforms the RWF estimator in all selected SIR regimes. Referring to FIG. 6, in low SIR regimes, the BLIC estimator is more sensitive to the assumption about the degree of sparsity of the interference. Assuming a very sparse interference pattern, corresponding to selecting P1, is detrimental to the overall estimation process, yielding an interference estimate sparser than the true one, and hence an MSE higher than when selecting a more conservative parameterization, i.e. using P3. These findings demonstrate the importance of the sparsity assumption in the design of the estimator. Lastly, when the BLIC estimator knows the sparsity pattern of the interference and the modulation alphabet, it achieves its best MSE performance in all SIR regimes. This indicates that signaling this information to the eMBB receiver may yield significant benefits on the overall receiver performance. The eMBB receiver may receive this information if the interfering uRLLC transmitter signals this info explicitly. Otherwise, the receiver may also learn this information iteratively, but not know it with certainty. For example, the vector $p_i$ of probabilities may be set to an initial estimate and be iteratively refined throughout the channel estimation process using an extended probabilistic model that treats $p_i$ as a vector of random variables. For example, the mean field belief propagation method may be used for such an estimation.

In Experiment 5, the convergence of the BLIC estimator is tested. To observe the convergence, the noise precision update (i.e. the estimated SNR) at each iteration is tracked.

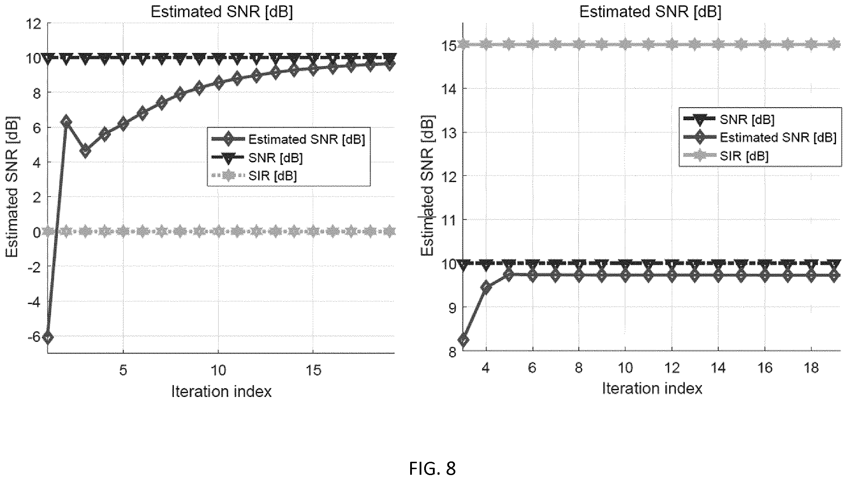

FIG. 8 shows a chart comparing estimated SNR against true SNR and SIR. Referring to FIG. 8, the noise precision updates versus the true SNR and two different SIR level are shown. At low SIR (left plot), the BLIC estimator takes about 15 iterations to compute a noise precision which closely approaches the true SNR level, while in high SIR (right plot), the BLIC estimator converges after only 5 iterations. To ensure robustness against SINR, the maximum number of iterations to set to 20.

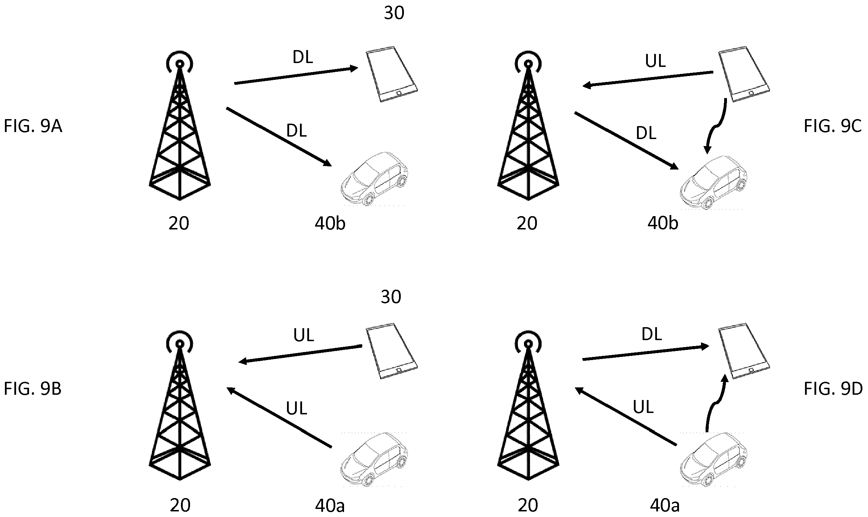

FIGS. 9A-9D show various scenarios of interference between eMBB traffic and uRLLC traffic where for example a BLIC estimator may be used. Referring to FIGS. 9A-9D, interference between eMBB traffic and uRLLC traffic may occur at uRLLC and eMBB receivers respectively. For a downlink channel, resources are dynamically shared between eMBB traffic and uRLLC traffic. When resources are not readily available to uRLLC traffic, a uRLLC transmission may occur in resources scheduled for ongoing eMBB transmissions.

Referring to FIG. 9A, this scenario is possible in both shared frequency and time slots when DL uRLLC traffic arrives to a TRP and needs to be served during an ongoing DL eMBB transmission.

Referring to FIG. 9B, this scenario is possible in both shared frequency and time slots when uRLLC traffic arrives to a UE and needs to be served during potential UL eMBB transmission. There are two different subcases:

Case 1: UL uRLLC traffic arrives and needs to be served during an ongoing scheduled UL eMBB transmission.
Case 2: UL uRLLC traffic arrives before the start of the scheduled UL eMBB transmission but there is insufficient time to reschedule the transmission.

Referring to FIG. 9C, this scenario is possible in shared time slots only when DL uRLLC traffic arrives to a TRP and needs to be served during potential UL eMBB transmission. There are two different subcases:

Case 1: DL uRLLC traffic arrives and needs to be served during scheduled UL eMBB transmission.
Case 2: DL uRLLC traffic arrives before the start of the scheduled UL eMBB transmission but there is insufficient time to reschedule the transmission.

Referring to FIG. 9D, this scenario is possible in shared time slots only when UL uRLLC traffic arrives to a UE and needs to be served during an ongoing DL transmission.

In various examples, eMBB signal interference at a uRLLC receiver may be ignored because uRLLC transmission signals may be transmitted at a higher power.

Although the various examples above have been described with respect to eMBB and uRLLC devices, the channel estimation process described herein is not limited to such devices. The channel estimation process described herein may be applied to any communication system where resource blocks of a serving signal may be shared by an interfering signal and where the interfering signal does not occupy all the resource blocks of the serving signal and the interfering signal has an unknown but fixed structure.

In the following, various aspects of this disclosure will be illustrated:

Example 1 is a system for processing wireless signals. The system may include a receiver configured to receive symbols of a superposed signal block, the superposed signal block including a serving signal block received via a first communication channel, the serving signal block including reference symbols provided in a plurality of reference symbol resource blocks known at the receiving side, the reference symbols selected from a first set of symbols known at the receiving side and modulated by a first modulation scheme known at the receiving sid, and an interfering signal block received via a second communication channel, the interfering signal block including interfering symbols selected from a second set of symbols and modulated by a second modulation scheme, and a channel estimator configured to perform a channel estimation, the channel estimation including performing a first partial channel estimation of the first communication channel by determining a first set of statistical channel parameters using the reference symbols and the received symbols corresponding to one or more of the plurality of reference symbol resource blocks and performing a second partial channel estimation of the second communication channel by determining a second set of statistical channel parameters using a plurality of candidate second modulation schemes from a set of candidate second modulation schemes and associating a probability value to each candidate second modulation scheme of the set of candidate second modulation schemes to approximate the interfering symbols provided in one or more of the plurality of reference symbol resource blocks as the reference symbols of the serving signal block.

In Example 2, the subject matter of Example 1 can optionally include that the channel estimator is configured based on the model $Y = Xh + Sg + n$, where $Y$ is a superposed signal block vector of size $P$, $X$ is a diagonal matrix of size $P$ of the reference symbols, $h$ is a channel frequency response vector of size $P$ of the first communication channel, $S$ is a diagonal matrix of size $P$ of the interfering symbols, $g$ is a channel frequency response vector of size $P$ of the second communication channel, and $n$ is a noise vector of size $P$ of the first communication channel, where $P$ is a positive integer indicating the number of reference symbols associated with the superposed signal block.

In Example 3, the subject matter of any of Examples 1 or 2 can optionally include that the channel estimator is further configured to determine an estimated mean of a noise precision vector $\lambda$, determine an estimated mean and variance of the channel frequency response of the first communication channel, and determine an estimated mean and variance of the channel frequency response of the second communication channel.

In Example 4, the subject matter of any of Examples 1-3 can optionally include that the channel estimator is further configured to iteratively refine the first and second set of statistical channel parameters.

In Example 5, the subject matter of any of Examples 1-4 can optionally include that the channel estimator is further configured to iteratively refine the probability value assigned to each candidate second modulation scheme of the set of candidate second modulation schemes.

In Example 6, the subject matter of any of Examples 2-5 can optionally include that the noise precision vector $\lambda$ includes a Gamma distribution and the mean is

$$\hat{\lambda} = \frac{P}{y^H y - 2R\left(y^H(X\hat{h} + \hat{S}\hat{g})\right) + 2R\left(\hat{h}^H \hat{X}^H \hat{S}\hat{g}\right) + \sum_{k=1}^{P}|x_k|^2 \left|\hat{h}_k\right|^2 + \sum_{k=1}^{P}|\hat{s}_k|^2|\hat{g}_k|^2},$$

where the ^ operator indicates an estimation of a variable, the *H* operator indicates the Hermitian matrix, and the *R* operator indicates the real value of the quantity in between the brackets.

In Example 7, the subject matter of any of Examples 3-6 can optionally include that the channel frequency response vector h of the first communication channel includes a Gaussian distribution and the mean and variance are:

$$\hat{h} = \hat{\lambda}\Sigma_h X^H\left(y - \hat{S}\hat{g}\right)$$

and

$$\Sigma_h = \left(\Sigma^{-1} + \hat{\lambda} X^H X\right)^{-1}$$

respectively, the ^ operator indicates an estimation and the *H* operator indicates the Hermitian matrix.

In Example 8, the subject matter of any of Examples 3-7 can optionally include that the channel frequency response vector g of the second communication channel includes a Gaussian distribution and the mean and variance are:

$$\hat{g} = \hat{\lambda}\Sigma_g S^H\left(y - X\hat{h}\right)$$

and

$$\Sigma_g = \left(\Sigma^{-1} + \hat{\lambda}\langle\hat{S}^H\hat{S}\rangle\right)^{-1}$$

respectively, the ^ operator indicates an estimation and the *H* operator indicates the Hermitian matrix.

In Example 9, the subject matter of any of Examples 1-8 can optionally include that the set of candidate second modulation schemes includes two or more lower order modulation schemes.

In Example 10, the subject matter of any of Examples 1-8 can optionally include that the probability value associated to each candidate second modulation scheme of the set of candidate second modulation schemes is the same.

In Example 11, the subject matter of any of Examples 1-8 can optionally include that the probability value associated to each candidate second modulation scheme of the set of candidate second modulation schemes is inversely related to the complexity of the modulation scheme.

In Example 12, the subject matter of any of Examples 1-8 can optionally include that the set of candidate second modulation schemes includes no modulation, BPSK (binary phase-shift keying) modulation, QPSK (quadrature phase-shift keying) modulation, and 16-QAM (quadrature amplitude modulation) modulation.

In Example 13, the subject matter of Example 12 can optionally include that the channel estimator is further configured to determine a probability mass function of $s_k$, a kth interfering entry of the diagonal matrix of the interfering symbols S:

$$p(s_k) = p_a \delta(s_k) + p_b p_{bpsk} \sum_{u \in S_{bpsk}} \delta(s_k - u) + p_c p_{qpsk} \sum_{u \in S_{qpsk}} \delta(s_k - u)$$

$$+ p_d p_{qam} \sum_{u \in S_{qam}} \delta(s_k - u)$$

where k is in the range from 1 to P, P is a number of reference symbols, $\delta()$ is a Dirac delta function, $p_a$ is the probability value of no modulation, $p_b$ is the probability value of BPSK modulation, $p_c$ is the probability value of QPSK modulation, $p_d$ is the probability value of 16-QAM modulation, So represents a constellation for no modulation, $S_{bpsk}$ represents a constellation for BPSK modulation, $S_{qpsk}$ represents a constellation for QPSK modulation, $S_{qam}$ represents a constellation for 16-QAM modulation, $p_b p_{sk}$ is a probability of a particular symbol in the $S_{bpsk}$ constellation, $p_{qpsk}$ is a probability of a particular symbol in the $S_{qpsk}$ constellation, $p_{qam}$ is a probability of a particular symbol in the $S_{qam}$ constellation, and u is a symbol of a constellation.

In Example 14, the subject matter of Example 13 can optionally include that the the channel estimator is further configured to determine an approximate posterior probability density function $q(s_k)$ of each interfering symbols $s_k$, where $q(s_k) = p(s_k)m(s_k)$ and $m(s_k)$ is an approximate probability density function based only on the received symbols.

In Example 15, the subject matter of Example 13 can optionally include that $p_{bpsk}$, $p_{qpsk}$, and $p_{qam}$ are equiprobable.

Example 16 is a method for processing wireless signals. The method may include receiving symbols of a superposed signal block, the superposed signal block including a serving signal block received via a first communication channel, the serving signal block including reference symbols provided in a plurality of reference symbol resource blocks known at the receiving side, the reference symbols selected from a first set of symbols known at the receiving side and modulated by a first modulation scheme known at the receiving side, and an interfering signal block received via a second communication channel, the interfering signal block including interfering symbols selected from a second set of symbols and modulated by a second modulation scheme, and performing a channel estimation, the channel estimation including performing a first partial channel estimation of the first communication channel by determining a first set of statistical channel parameters using the reference symbols and the received symbols corresponding to one or more of the plurality of reference symbol resource blocks and performing a second partial channel estimation of the second communication channel by determining a second set of statistical channel parameters using a plurality of candidate second modulation schemes from a set of candidate second modulation schemes and associating a probability value to each candidate second modulation scheme of the set of candidate second modulation schemes to approximate the interfering symbols provided in one or more of the plurality of reference symbol resource blocks as the reference symbols of the serving signal block.

In Example 17, the subject matter of Example 16 can optionally include that the channel estimation is performed based on the model Y = Xh + Sg + n, where Y is a superposed signal block vector of size P, X is a diagonal matrix of size P of the reference symbols, h is a channel frequency response vector of size P of the first communication channel, S is a diagonal matrix of size P of the interfering symbols, g is a channel frequency response vector of size P of the second communication channel, and n is a noise vector of size P, where P is a positive integer indicating the number of reference symbols associated with the superposed signal block.

In Example 18, the subject matter of any of Examples 16 or 17 can optionally include that performing a channel estimation further includes determining an estimated mean of a noise precision vector λ, determining an estimated mean and variance of the channel frequency response of the first communication channel, and determining an estimated mean and variance of the channel frequency response of the second communication channel.

In Example 19, the subject matter of any of Examples 16-18 can optionally include iteratively refining the first and second set of statistical channel parameters.

In Example 20, the subject matter of any of Examples 16-19 can optionally include iteratively refining the probability value assigned to each candidate second modulation scheme of the set of candidate second modulation schemes.

In Example 21, the subject matter of any of Examples 18-20 can optionally include that the noise precision vector λ includes a Gamma distribution and the mean is

$$\hat{\lambda} = \frac{P}{y^H y - 2R\left(y^H\left(X\hat{h} + \hat{S}\hat{g}\right)\right) + 2R\left(\hat{h}^H \hat{X}^H \hat{S}\hat{g}\right) + \sum_{k=1}^{P}|x_k|^2\left|\hat{h}_k\right|^2 + \sum_{k=1}^{P}|\hat{s}_k|^2|\hat{g}_k|^2},$$

where the ^ operator indicates an estimation of a variable, the *H* operator indicates the Hermitian matrix, and the *R* operator indicates the real value of the quantity in between the brackets.

In Example 22, the subject matter of any of Examples 18-21 can optionally include that the channel frequency response vector h of the first communication channel includes a Gaussian distribution and the mean and variance are:

$$\hat{h} = \hat{\lambda}\Sigma_h X^H\left(y - \hat{S}\hat{g}\right)$$

and

$$\Sigma_h = \left(\Sigma^{-1} + \hat{\lambda}X^H X\right)^{-1}$$

respectively, the ^ operator indicates an estimation and the *H* operator indicates the Hermitian matrix.

In Example 23, the subject matter of any of Examples 18-22 can optionally include that the channel frequency response vector g of the second communication channel includes a Gaussian distribution and the mean and variance are:

$$\hat{g} = \hat{\lambda}\Sigma_g S^H\left(y - X\hat{h}\right)$$

and

$$\Sigma_g = \left(\Sigma^{-1} + \hat{\lambda}\langle\hat{S}^H\hat{S}\rangle\right)^{-1}$$

respectively, the ^ operator indicates an estimation and the *H* operator indicates the Hermitian matrix.

In Example 24, the subject matter of any of Examples 16-23 can optionally include that the set of candidate second modulation schemes includes two or more lower order modulation schemes.

In Example 25, the subject matter of any of Examples 16-23 can optionally include that the probability value associated to each candidate second modulation scheme of the set of candidate second modulation schemes is the same.

In Example 26, the subject matter of any of Examples 16-23 can optionally include that the probability value associated to each candidate second modulation scheme of the set of candidate second modulation schemes is inversely related to the complexity of the modulation scheme.

In Example 27, the subject matter of any of Examples 16-26 can optionally include that the set of candidate second modulation schemes includes no modulation, BPSK (binary phase-shift keying) modulation, QPSK (quadrature phase-shift keying) modulation, and 16-QAM (quadrature amplitude modulation) modulation.

In Example 28, the subject matter of Example 27 can optionally include performing a channel estimation further includes determining a probability mass function of $s_k$, a kth interfering entry of the diagonal matrix of the interfering symbols S:

$$p(s_k) = p_a \delta(s_k) + p_b p_{bpsk} \sum_{u \in S_{bpsk}} \delta(s_k - u) + p_c p_{qpsk} \sum_{u \in S_{qpsk}} \delta(s_k - u)$$

$$+ p_d p_{qam} \sum_{u \in S_{qam}} \delta(s_k - u)$$

where k is in the range from 1 to P, P is a number of reference symbols, $\delta()$ is a Dirac delta function, $p_a$ is the probability value of no modulation, $p_b$ is the probability value of BPSK modulation, $p_c$ is the probability value of QPSK modulation, $p_d$ is the probability value of 16-QAM modulation, So represents a constellation for no modulation, $S_{bpsk}$ represents a constellation for BPSK modulation, $S_{qpsk}$ represents a constellation for QPSK modulation, $S_{qam}$ represents a constellation for 16-QAM modulation, $p_b p_{sk}$ is a probability of a particular symbol in the $S_{bpsk}$ constellation, $p_{qpsk}$ is a probability of a particular symbol in the $S_{qpsk}$ constellation, $p_{qam}$ is a probability of a particular symbol in the $S_{qam}$ constellation, and u is a symbol of a constellation.

In Example 29, the subject matter of Example 28 can optionally include that performing a channel estimation further includes determining an approximate posterior probability density function $q(s_k)$ of each interfering symbols $s_k$, where $q(s_k) = p(s_k)m(s_k)$ and $m(s_k)$ is an approximate probability density function based only on the received symbols.

In Example 30, the subject matter of Example 28 can optionally include that $p_{bpsk}$, $p_{qpsk}$, and $p_{qam}$ are equiprobable.

Example 31 is a device for processing wireless signals. The device includes a processor and a memory operably coupled to the processor, wherein the memory stores code that, when executed by the processor, causes the device to receive symbols of a superposed signal block, the superposed signal block including a serving signal block received via a first communication channel, the serving signal block including reference symbols provided in a plurality of reference symbol resource blocks known at the receiving side, the reference symbols selected from a first set of symbols known at the receiving side and modulated by a first modulation scheme known at the receiving side and an interfering signal block received via a second communication channel, the interfering signal block including interfering symbols selected from a second set of symbols and modulated by a second modulation scheme and perform a channel estimation, the channel estimation including performing a first partial channel estimation of the first communication channel by determining a first set of statistical channel parameters using the reference symbols and the received symbols corresponding to one or more of the plurality of reference symbol resource blocks and performing a second partial channel estimation of the second communication channel by determining a second set of statistical channel parameters using a plurality of candidate second modulation schemes from a set of candidate second modulation schemes and associating a probability value to each candidate second modulation scheme of the set of candidate second modulation schemes to approximate the interfering symbols provided in one or more of the plurality of reference symbol resource blocks as the reference symbols of the serving signal block.

In Example 32, the subject matter of Example 31 can optionally include the superposed signal block is based on the model Y = Xh + Sg + n, where Y is a superposed signal block vector of size P, X is a diagonal matrix of size P of the reference symbols, h is a channel frequency response vector of size P of the first communication channel, S is a diagonal matrix of size P of the interfering symbols, g is a channel frequency response vector of size P of the second communication channel, and n is a noise vector of size P of the first communication channel, where P is a positive integer indicating the number of reference symbols associated with the superposed signal block.

In Example 33, the subject matter of any of Examples 31 or 32 can optionally include that the memory further stores code that, when executed by the processor, causes the device to determine an estimated mean of a noise precision vector λ, determine an estimated mean and variance of the channel frequency response of the first communication channel, and determine an estimated mean and variance of the channel frequency response of the second communication channel.

In Example 34, the subject matter of any of Examples 31-33 can optionally include the memory further stores code that, when executed by the processor, causes the device to iteratively refine the first and second set of statistical channel parameters.

In Example 35, the subject matter of any of Examples 31-34 can optionally include that the memory further stores code that, when executed by the processor, causes the device to iteratively refine the probability value assigned to each candidate second modulation scheme of the set of candidate second modulation schemes.

In Example 36, the subject matter of any of Examples 33-35 can optionally include that the noise precision vector λ includes a Gamma distribution and the mean is

$$\hat{\lambda} = \frac{P}{y^H y - 2R\left(y^H\left(X\hat{h} + \hat{S}\hat{g}\right)\right) + 2R\left(\hat{h}^H\hat{X}^H\hat{S}\hat{g}\right) + \sum_{k=1}^{P}|x_k|^2\left|\hat{h}_k\right|^2 + \sum_{k=1}^{P}|\hat{s}_k|^2|\hat{g}_k|^2},$$

where the ^ operator indicates an estimation of a variable, the $H$ operator indicates the Hermitian matrix, and the $R$ operator indicates the real value of the quantity in between the brackets.

In Example 37, the subject matter of any of Examples 33-36 can optionally include the channel frequency response vector h of the first communication channel includes a Gaussian distribution and the mean and variance are:

$$\hat{h} = \hat{\lambda}\Sigma_h X^H\left(y - \hat{S}\hat{g}\right)$$

and

$$\Sigma_h = \left(\Sigma^{-1} + \hat{\lambda}X^H X\right)^{-1}$$

respectively, the ^ operator indicates an estimation and the $H$ operator indicates the Hermitian matrix.

In Example 38, the subject matter of any of Examples 33-37 can optionally include that the channel frequency response vector g of the second communication channel includes a Gaussian distribution and the mean and variance are:

$$\hat{g} = \hat{\lambda}\Sigma_g S^H\left(y - X\hat{h}\right)$$

and

$$\Sigma_g = \left(\Sigma^{-1} + \hat{\lambda}\langle\hat{S}^H\hat{S}\rangle\right)^{-1}$$

respectively, the ^ operator indicates an estimation and the $H$ operator indicates the Hermitian matrix.

In Example 39, the subject matter of any of Examples 31-38 can optionally include that the set of candidate second modulation schemes includes two or more lower order modulation schemes.

In Example 40, the subject matter of any of Examples 31-38 can optionally include that the probability value associated to each candidate second modulation scheme of the set of candidate second modulation schemes is the same.

In Example 41, the subject matter of any of Examples 31-38 can optionally include that the probability value associated to each candidate second modulation scheme of the set of candidate second modulation schemes is inversely related to the complexity of the modulation scheme.

In Example 42, the subject matter of any of Examples 31-41 can optionally include that the set of candidate second modulation schemes includes no modulation, BPSK (binary phase-shift keying) modulation, QPSK (quadrature phase-shift keying) modulation, and 16-QAM (quadrature amplitude modulation) modulation.

In Example 43, the subject matter of Example 42 can optionally include that the memory further stores code that, when executed by the processor, causes the device to determine a probability mass function of $s_k$, a kth interfering entry of the diagonal matrix of the interfering symbols S:

$$p(s_k) = p_a\delta(s_k) + p_b p_{bpsk}\sum_{u \in S_{bpsk}}\delta(s_k - u) + p_c p_{qpsk}\sum_{u \in S_{qpsk}}\delta(s_k - u)$$

$$+ p_d p_{qam}\sum_{u \in S_{qam}}\delta(s_k - u)$$

where k is in the range from 1 to P, P is a number of reference symbols, $\delta()$ is a Dirac delta function, $p_a$ is the probability value of no modulation, $p_b$ is the probability value of BPSK modulation, $p_c$ is the probability value of QPSK modulation, $p_d$ is the probability value of 16-QAM modulation, So represents a constellation for no modulation, $S_{bpsk}$ represents a constellation for BPSK modulation, $S_{qpsk}$ represents a constellation for QPSK modulation, $S_{qam}$ represents a constellation for 16-QAM modulation, $p_bp_{sk}$ is a probability of a particular symbol in the $S_{bpsk}$ constellation, $p_{qpsk}$ is a probability of a particular symbol in the $S_{qpsk}$ constellation, $p_{qam}$ is a probability of a particular symbol in the $S_{qam}$ constellation, and u is a symbol of a constellation.

In Example 44, the subject matter of Example 43 can optionally include that the memory further stores code that, when executed by the processor, causes the device to determine an approximate posterior probability density function $q(s_k)$ of each interfering symbols $s_k$, where $q(s_k) = p(s_k)m(s_k)$ and $m(s_k)$ is an approximate probability density function based only on the received symbols.

In Example 45, the subject matter of Example 43 can optionally included that $p_{bpsk}$, $p_{qpsk}$, and $p_{qam}$ are equiprobable.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1. A system for processing wireless signals comprising:

   a receiver configured to receive symbols of a superposed signal block, the superposed signal block comprising:

   a serving signal block received via a first communication channel, the serving signal block comprising reference symbols provided in a plurality of reference symbol resource blocks known at the receiving side, the reference symbols selected from a first set of symbols known at the receiving side and modulated by a first modulation scheme known at the receiving side; and
   an interfering signal block received via a second communication channel, the interfering signal block comprising interfering symbols selected from a second set of symbols and modulated by a second modulation scheme; and

   a channel estimator configured to perform a channel estimation, the channel estimation comprising:

   performing a first partial channel estimation of the first communication channel by determining a first set of statistical channel parameters using the reference symbols and the received symbols corresponding to one or more of the plurality of reference symbol resource blocks; and
   performing a second partial channel estimation of the second communication channel by determining a second set of statistical channel parameters using a plurality of candidate second modulation schemes from a set of candidate second modulation schemes and associating a probability value to each candidate second modulation scheme of the set of candidate second modulation schemes to approximate the interfering symbols provided in one or more of the plurality of reference symbol resource blocks as the reference symbols of the serving signal block.

2. The system of claim 1, wherein the channel estimator is configured based on the model $Y = Xh + Sg + n$, where Y is a superposed signal block vector of size P, X is a diagonal matrix of size P of the reference symbols, h is a channel frequency response vector of size P of the first communication channel, S is a diagonal matrix of size P of the interfering symbols, g is a channel frequency response vector of size P of the second communication channel, and n is a noise vector of size P of the first communication channel, where P is a positive integer indicating the number of reference symbols associated with the superposed signal block.

3. The system of any of claims 1 or 2, wherein the channel estimator is further configured to determine an estimated mean of a noise precision vector $\lambda$, determine an estimated mean and variance of the channel frequency response of the first communication channel, and determine an estimated mean and variance of the channel frequency response of the second communication channel.

4. The system of any of claims 1-3, wherein the channel estimator is further configured to iteratively refine the first and second set of statistical channel parameters.

**5.** The system of any of claims 1-4, wherein the channel estimator is further configured to iteratively refine the probability value assigned to each candidate second modulation scheme of the set of candidate second modulation schemes.

**6.** The system of any of claims 3-5, wherein the noise precision vector λ comprises a Gamma distribution and the mean is

$$\hat{\lambda} = \frac{P}{y^H y - 2R\left(y^H\left(X\hat{h} + \hat{S}\hat{g}\right)\right) + 2R\left(\hat{h}^H \hat{X}^H \hat{S}\hat{g}\right) + \sum_{k=1}^{P}|x_k|^2\left|\hat{h}_k\right|^2 + \sum_{k=1}^{P}|\hat{s}_k|^2|\hat{g}_k|^2},$$

where the ^ operator indicates an estimation of a variable, the *H* operator indicates the Hermitian matrix, and the *R* operator indicates the real value of the quantity in between the brackets.

**7.** The system of any of claims 3-6, wherein
the channel frequency response vector h of the first communication channel comprises a Gaussian distribution and the mean and variance are:

$$\hat{h} = \hat{\lambda}\Sigma_h X^H\left(y - \hat{S}\hat{g}\right)$$

and

$$\Sigma_h = \left(\Sigma^{-1} + \hat{\lambda}X^H X\right)^{-1}$$

respectively, the ^ operator indicates an estimation and the *H* operator indicates the Hermitian matrix.

**8.** The system of any of claims 3-7, wherein
the channel frequency response vector g of the second communication channel comprises a Gaussian distribution and the mean and variance are:

$$\hat{g} = \hat{\lambda}\Sigma_g S^H\left(y - X\hat{h}\right)$$

and

$$\Sigma_g = \left(\Sigma^{-1} + \hat{\lambda}\langle\hat{S}^H\hat{S}\rangle\right)^{-1}$$

respectively, the ^ operator indicates an estimation and the *H* operator indicates the Hermitian matrix.

**9.** The system of any of claims 1-8, wherein the set of candidate second modulation schemes comprises two or more lower order modulation schemes.

**10.** The system of any of claims 1-8, wherein the probability value associated to each candidate second modulation scheme of the set of candidate second modulation schemes is the same.

**11.** The system of any of claims 1-8, wherein the probability value associated to each candidate second modulation scheme of the set of candidate second modulation schemes is inversely related to the complexity of the modulation scheme.

**12.** The system of any of claims 1-11, wherein the set of candidate second modulation schemes comprises no modulation, BPSK (binary phase-shift keying) modulation, QPSK (quadrature phase-shift keying) modulation, and 16-QAM (quadrature amplitude modulation) modulation.

**13.** The system of claim 12, wherein the channel estimator is further configured to determine a probability mass function of $s_k$, a kth interfering entry of the diagonal matrix of the interfering symbols S:

$$p(s_k) = p_a\delta(s_k) + p_b p_{bpsk} \sum_{u \in S_{bpsk}} \delta(s_k - u) + p_c p_{qpsk} \sum_{u \in S_{qpsk}} \delta(s_k - u)$$

$$+ p_d p_{qam} \sum_{u \in S_{qam}} \delta(s_k - u)$$

where k is in the range from 1 to P, P is a number of reference symbols, $\delta()$ is a Dirac delta function, $p_a$ is the probability value of no modulation, $p_b$ is the probability value of BPSK modulation, $p_c$ is the probability value of QPSK modulation, $p_d$ is the probability value of 16-QAM modulation, $S_0$ represents a constellation for no modulation, $S_{bpsk}$ represents a constellation for BPSK modulation, $S_{qpsk}$ represents a constellation for QPSK modulation, $S_{qam}$ represents a constellation for 16-QAM modulation, $p_b p_{sk}$ is a probability of a particular symbol in the $S_{bpsk}$ constellation, $p_{qpsk}$ is a probability of a particular symbol in the $S_{qpsk}$ constellation, $p_{qam}$ is a probability of a particular symbol in the $S_{qam}$ constellation, and u is a symbol of a constellation.

**14.** A method for processing wireless signals comprising:

receiving symbols of a superposed signal block, the superposed signal block comprising:

a serving signal block received via a first communication channel, the serving signal block comprising reference symbols provided in a plurality of reference symbol resource blocks known at the receiving side, the reference symbols selected from a first set of symbols known at the receiving side and modulated by a first modulation scheme known at the receiving side; and
an interfering signal block received via a second communication channel, the interfering signal block comprising interfering symbols selected from a second set of symbols and modulated by a second modulation scheme; and
performing a channel estimation, the channel estimation comprising:

performing a first partial channel estimation of the first communication channel by determining a first set of statistical channel parameters using the reference symbols and the received symbols corresponding to one or more of the plurality of reference symbol resource blocks; and
performing a second partial channel estimation of the second communication channel by determining a second set of statistical channel parameters using a plurality of candidate second modulation schemes from a set of candidate second modulation schemes and associating a probability value to each candidate second modulation scheme of the set of candidate second modulation schemes to approximate the interfering symbols provided in one or more of the plurality of reference symbol resource blocks as the reference symbols of the serving signal block.

**15.** A device for processing wireless signals comprising:

a processor; and
a memory operably coupled to the processor, wherein the memory stores code that, when executed by the processor, causes the device to:

receive symbols of a superposed signal block, the superposed signal block comprising:

a serving signal block received via a first communication channel, the serving signal block comprising reference symbols provided in a plurality of reference symbol resource blocks known at the receiving side, the reference symbols selected from a first set of symbols known at the receiving side and modulated by a first modulation scheme known at the receiving side; and
an interfering signal block received via a second communication channel, the interfering signal block comprising interfering symbols selected from a second set of symbols and modulated by a second modulation scheme; and

perform a channel estimation, the channel estimation comprising:

performing a first partial channel estimation of the first communication channel by determining a first set of statistical channel parameters using the reference symbols and the received symbols corresponding to one or more of the plurality of reference symbol resource blocks; and

performing a second partial channel estimation of the second communication channel by determining a second set of statistical channel parameters using a plurality of candidate second modulation schemes from a set of candidate second modulation schemes and associating a probability value to each candidate second modulation scheme of the set of candidate second modulation schemes to approximate the interfering symbols provided in one or more of the plurality of reference symbol resource blocks as the reference symbols of the serving signal block.

FIG. 1

EP 3 457 647 A1

FIG. 2A

FIG. 2B

FIG. 3

FIG. 4

FIG. 5

FIG. 6

FIG. 7

FIG. 8

EP 3 457 647 A1

FIG. 9C

FIG. 9D

UL

DL

40b

20

FIG. 9A

30

DL

DL

40b

20

30

DL

UL

40a

20

FIG. 9B

UL

UL

40a

20

200

210 — Receiving a superposed signal including a reference signal over a communication channel having reference symbols selected from a first set of symbols and modulated by a first modulation scheme and an interfering signal over the communication channel having interfering symbols selected from a second set of symbols and modulated by a second modulation scheme, where the first set of symbols is known, the first modulation scheme is known, the second set of symbols is unknown, and the second modulation scheme is unknown.

220 — Performing a channel estimation of the communication channel by identifying a plurality of statistical channel parameters representing a channel frequency response of a reference channel and a channel frequency response of an interfering channel by assuming that the second modulation scheme is one of a set of candidate second modulation schemes and associating a probability value to each modulation scheme of the set of candidate second modulation schemes.

230 — Iteratively refining the statistical channel parameters of the unknown variables based on the observed variables and known variables until there is a convergence

FIG. 10

Europäisches
Patentamt

European
Patent Office

Office européen
des brevets

# EUROPEAN SEARCH REPORT

Application Number

EP 17 19 1265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YAN ZHU ET AL: "A Message-Passing Approach for Joint Channel Estimation, Interference Mitigation and Decoding", ARXIV.ORG, CORNELL UNIVERSITY LIBRARY, 201 OLIN LIBRARY CORNELL UNIVERSITY ITHACA, NY 14853, 11 January 2009 (2009-01-11), XP080356512, DOI: 10.1109/TWC.2009.12.081708 * abstract * * Sections II-III * | 1-15 | INV. H04L25/02 H04L27/26 |
| Y | US 2013/114437 A1 (YOO TAESANG [US] ET AL) 9 May 2013 (2013-05-09) * paragraph [0159] - paragraph [0172] * | 1-15 | |
| A | BARBU OANA-ELENA ET AL: "Interference-aware OFDM receiver for channels with sparse common supports", 2017 IEEE INTERNATIONAL CONFERENCE ON COMMUNICATIONS (ICC), IEEE, 21 May 2017 (2017-05-21), pages 1-6, XP033133216, DOI: 10.1109/ICC.2017.7997356 [retrieved on 2017-07-28] * abstract * * Sections II-III * | 1-15 | TECHNICAL FIELDS SEARCHED (IPC) H04L H04B |
| A | PEDERSEN NIELS LOVMAND ET AL: "A fast iterative Bayesian inference algorithm for sparse channel estimation", 2013 IEEE INTERNATIONAL CONFERENCE ON COMMUNICATIONS (ICC), IEEE, 9 June 2013 (2013-06-09), pages 4591-4596, XP032522157, ISSN: 1550-3607, DOI: 10.1109/ICC.2013.6655294 [retrieved on 2013-11-04] * Sections II-III * | 1-15 | |

The present search report has been drawn up for all claims

| Place of search | Date of completion of the search | Examiner |
|---|---|---|
| Munich | 5 March 2018 | El Hajj Shehadeh, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 1265

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2018

| Patent document cited in search report | | Publication date | Patent family member(s) | | Publication date |
|---|---|---|---|---|---|
| US 2013114437 | A1 | 09-05-2013 | CN | 103999389 A | 20-08-2014 |
| | | | EP | 2774292 A1 | 10-09-2014 |
| | | | JP | 5940674 B2 | 29-06-2016 |
| | | | JP | 2015501622 A | 15-01-2015 |
| | | | KR | 20140099263 A | 11-08-2014 |
| | | | KR | 20170029643 A | 15-03-2017 |
| | | | US | 2013114437 A1 | 09-05-2013 |
| | | | WO | 2013066399 A1 | 10-05-2013 |

EPO FORM P0459

For more details about this annex : see Official Journal of the European Patent Office, No. 12/82